# EUROPÄISCHE PATENTSCHRIFT

(11) **EP 0 837 108 B1**
(45) Veröffentlichungstag und Bekanntmachung des Hinweises auf die Patenterteilung: **13.02.2002**
(21) Anmeldenummer: 97117106.1
(22) Anmeldetag: 02.10.1997
(51) Int. Cl.: C09C 1/24

(54) **Magnetisches Eisenoxid, Verfahren zur Herstellung und dessen Verwendung**
Magnetic iron oxide, process for its manufacture and its use
Oxyde de fer magnétique, procédé pour sa fabrication et son utilisation

(30) Priorität: 15.10.1996 DE 19642534
(43) Veröffentlichungstag der Anmeldung: 22.04.1998
(73) Patentinhaber: BAYER AG, 51368 Leverkusen (DE)
(72) Erfinder: Körschen, Wolfgang, 47441 Moers (DE); Meisen, Ulrich, Dr., 47829 Krefeld (DE)

(56) Entgegenhaltungen:
- EP-A- 0 262 503
- US-A- 4 921 542

## Beschreibung

Die Erfindung betrifft Magnetitteilchen mit einem Eisengehalt von 45 bis 73 Gew.-%, ein Verfahren zur ihrer Herstellung und ihre Verwendung zur Herstellung von Tonern, Druckfarben und Drucktinten.

Teilchenförmige Magnetite, die durch ein Fällverfahren aus wäßrigen Lösungen hergestellt werden, sind seit langem bekannt. In US-A 0 802 928 ist bereits die Herstellung von Magnetit durch Fällung von Eisen-II-sulfat mit einer alkalischen Komponente und anschließender Oxidation mit Luft beschrieben. Ausgehend von diesem Verfahren wurden seitdem zahlreiche weitere Verfahrensvarianten zur Herstellung von Magnetiten nach dem Fällungsverfahren entwickelt. Diese Produkte fanden zunächst zur Herstellung von Farben aller Art Anwendung. Der besondere Vorteil von Magnetiten gegenüber organischen Farbstoffen und Ruß liegt in der sehr viel besseren Wetterbeständigkeit, so dass derartige Farben auch im Außenbereich angewendet werden können. Weiterhin werden Fällungsmagnetite zur Einfärbung von Betonformteilen, wie Betonpflastersteinen oder Betondachsteinen eingesetzt. Seit geraumer Zeit werden Magnetite auch in der Elektrofotografie zur Herstellung von Tonern eingesetzt. Zur Herstellung von Tonern für Kopiergeräte mit Einkomponententonern werden besonders bevorzugt Magnetite, die nach dem Fällungsverfahren hergestellt wurden, eingesetzt. Der in Kopiergeräten eingesetzte magnetische Toner muß verschiedene allgemeine Eigenschaften aufweisen. Mit fortschreitender Entwicklung und Verbesserung der Kopiergeräte und Drucker wurden die Anforderungen an den magnetischen Toner und folglich an den hierfür verwendeten Magnetit immer höher. Die neueste Druckergeneration erreicht eine Auflösung von mehr als 600 dpi (Punkte pro Zoll, dots per inch), was zur Entwicklung feinteiliger Toner mit enger Teilchengrößenverteilung geführt hat. Dies hatte zur Folge, dass die hierfür erforderlichen Magnetite ebenfalls eine sehr enge Teilchengrößenverteilung aufweisen müssen. Weiterhin ist eine bestimmte Teilchengröße erforderlich, so dass eine homogene Verteilung der Magnetitteilchen im fertigen Toner gewährleistet ist. Die Magnetite selbst müssen einen ausreichend hohen elektrischen Widerstand haben, um das latente Bild während der elektrostatischen Übertragung zu stabilisieren. Weiterhin müssen Koerzitivkraft, Sättigungsmagnetisierung und die remanente Magnetisierung im richtigen Verhältnis zu den in der Maschine herrschenden Feldstärken sein. Im Kopiergerät wirken hauptsächlich zwei Kräfte auf den Toner, die magnetische Anziehung, durch Sättigung und Remanenz festgelegt und die triboelektrische Aufladung. Ein für ein spezielles Kopiergerät geeigneter Toner muß also beide Eigenschaften erfüllen. Die magnetischen Eigenschaften des Eisenoxides können über Teilchenform und Teilchengröße, also letztendlich über den Fällprozeß beeinflußt werden. Die Einstellung der triboelektrischen Eigenschaften ist nicht so einfach möglich. Zur Einstellung bestimmter Ladungspotentiale werden vielfach Übergangsmetallkomplexe, speziell Chromkomplexe bei der Tonerherstellung eingesetzt. Diese Materialien sind teilweise toxisch und zeichnen sich durch einen relativ hohen Preis aus.

Die Herstellung von Magnetiten nach dem Fällungsverfahren unter Zusatz von Silicium wird in JP-A-51 044 298 (Chemical Abstracts) beschrieben. Reine Fällungsmagnetite ohne Zusatz von Fremdelementen können nach DE-A 3 209 469 diskontinuierlich oder nach DE-A 2 618 058 kontinuierlich hergestellt werden. In den oben genannten Schriften wird FeSO₄ als Eisen-II-Salz eingesetzt. Es ist jedoch auch möglich, zur Herstellung eines Magnetits nach dem Fällungsverfahren andere lösliche Eisen-II-Salze einzusetzen. So kommt auch der Einsatz von FeCl₂, wie in DE-A 3 004 718 beschrieben, in Frage. Der Einsatz von FeSO₄ oder FeCl₂ hat den Vorteil, dass beide Stoffe in großen Mengen als Abfallstoffe der eisenverarbeitenden Industrie bezogen werden können. Als Fällungsmittel können neben dem am häufigsten eingesetzten Natriumhydroxid auch CaO oder CaCO₃ (DE-A 3 004 718), Ammoniak (DE-A 2 460 493) oder Na₂CO₃ (EP-A 0 187 331) verwendet werden. Als Oxidationsmittel wird in der Regel Luft eingestzt. Es werden jedoch auch Verfahren zur Oxidation mit Nitraten (DD-A 216 040 und DD-A 284 478) beschrieben.

Für die Anwendung in magnetischen Tonern ist die Herstellung Si-haltiger Magnetite besonders vorteilhaft. Diese haben ein anderes Ladungsverhalten als reine Magnetite und weisen bei gleicher Teilchengröße eine höhere thermische Stabilität auf. Ein Verfahren zur Herstellung derartiger Teilchen wird in JP-A 61 034 070 (Chemical Abstract) beschrieben. Hierbei wird die Si-Komponente zum Eisen-II-Sulfat gegeben, was zu Ausfällungen von Kieselsäure und damit zu einer ungleichmäßigen Verteilung des Si im Magnetitgitter führt. In US-A 4 992 191 wird ein Magnetit mit 0,1 bis 5,0 At% Si, bezogen auf Fe, beansprucht, der für die Herstellung von Tonern besonders geeignet sein soll. Zahlreiche weitere Schriften sind seitdem erschienen, die die Herstellung sowie die Verwendung Si-haltiger Magnetite beschreiben. Si-haltige Magnetite sind seit über 30 Jahren auf dem Markt.

Die Teilchengröße und Teilchenform der Magnetite kann durch den pH-Wert bei der Fällung gesteuert werden. Bei hohen pH-Werten und entsprechend niedrigen Werten für das Verhältnis Fe(II)/NaOH (kleiner als 0,47) erhält man Oktaeder. Diese Teilchen haben die relativ höchste Koerzitivkraft und Remanenz. Fällt man die Magnetite im Bereich eines Fe(II)/NaOH-Verhältnisses von mehr als 0,48, so erhält man zunehmend runde Teilchen, die sich durch sehr niedrige Remanenz auszeichnen. Weiterhin sind diese Teilchen generell, im Vergleich mit den bei anderen pH-Werten hergestellten Magnetiten, relativ feinteilig. Diese Zusammenhänge sind in Bull. Chem. Soc. Japan, 47(7), 1974, 1646-50 beschrieben.

US-A 5 401 313 beschreibt oberflächenmodifizierte Partikel, die unter anderem auch in Tonern eingesetzt werden können. Die Partikel enthalten mindestens ein Mittel, das die elektrische Ladung modifiziert, und mindestens ein Mittel, das die Dispersion fördert. Als Partikel werden u.a. Metalloxide wie Eisenoxide eingesetzt.

In US-A 4 303 749 werden magnetische Toner beansprucht, die magnetisches Eisenoxid enthalten. Das eingesetzte Eisenoxid ist mit einem organischen Titanat oder ein Lecithinreaktiven Kopplungsmittel behandelt.

EP-A 0 533 069 beschreibt magnetische Toner und magnetische Entwickler. Zu deren Herstellung werden ein Harz und ein magnetisches Eisenoxid, das Silizium enthält, eingesetzt.

Aufgabe der vorliegenden Erfindung war es, magnetisches Eisenoxid zur Verfügung zu stellen, welches eine hohe triboelektrische Ladung aufweist und gleichzeitig die erforderliche enge Teilchengrößenverteilung sowie die erforderliche Teilchengröße hat.

Diese Aufgabe konnte mit den erfindungsgemäßen magnetischen Eisenoxiden, die bestimmte Zusätze/Dotierungen enthalten, gelöst werden.

Gegenstand der Erfindung sind magnetische Eisenoxide mit einem Fe-Gehalt von 45 bis 73 Gew.-%, bevorzugt von 62 bis 71 Gew.-%, ganz besonders bevorzugt von 67 bis 71,5 Gew.-%, bestimmt nach DIN 55 913, einer Helligkeit (L*) von 45,0 bis 65,0 CIELAB-Einheiten, einem Farbstich (a*) von -0,5 bis 1,5 CIELAB-Einheiten, einem Farbstich (b*) von -1,0 bis -7,0 CIELAB-Einheiten und mit einer oder mehreren zusätzlichen Verbindungen aus der Gruppe bestehend aus Oxiden, Hydroxiden, Oxihydroxiden, schwer wasserlöslichen und leicht wasserlöslichen Salzen der Metalle Lithium, Natrium, Kalium, Magnesium, Calcium, Strontium, Barium, Mangan und Zink, aus organischen Zirkonium-IV-Verbindungen, aus organischen Cer-IV-Verbindungen und aus organischen Zinn-IV-Verbindungen in einer Menge von 0,1 bis 5 Gew.-%, die die triboelektrische Ladung des Ausgangsmaterials (ohne Zusatz) um mindestens 30 % erhöhen, bevorzugt um mindestens 50 %, erhältlich dadurch, dass ein magnetisches Eisenoxid mit einem Eisengehalt von 45 bis 73 Gew.-% und einer Helligkeit (L*) von 45,0 bis 70 CIELAB-Einheiten, einem Farbstich (a*) von -0,5 bis 1,5 CIELAB-Einheiten und einem Farbstich (b*) von -1,0 bis -7,0 CIELAB-Einheiten vorgelegt wird, eine oder mehrere zusätzliche Verbindungen aus der Gruppe bestehend aus Oxiden, Hydroxiden, Oxihydroxiden, der Metalle Lithium, Natrium, Kalium, Magnesium, Calcium, Strontium, Barium, Mangan und Zink, organischer Zirkonium-IV-Verbindungen, organischer Cer-IV-Verbindungen und organischer Zinn-IV-Verbindungen, zugesetzt werden, danach gut gemischt und gegebenenfalls getrocknet wird.

Bevorzugt haben die erfindungsgemäßen magnetischen Eisenoxide eine triboelektrische Ladung von -10 bis +10 µC/g, besonders bevorzugt von -5 bis +10 µC/g, ganz besonders bevorzugt von 0 bis +10 µC/g.

Allgemein haben magnetische Eisenoxide triboelektrische Ladungen von 〈 -5 µC/g. Vereinzelt vorkommende Eisenoxide haben triboelektrische Ladungen von 〉 -5 µC/g. Diese Eisenoxide haben jedoch häufig schlechte Farbwerte.

Bevorzugt werden die erfindungsgemäßen magnetischen Eisenoxide zur Herstellung von Tonern, Druckfarben und Farben für Tintenstrahldrucker verwendet.

Bevorzugt erfolgt die Zugabe der zusätzlichen Verbindung zu einer wäßrigen Dispersion des erfmdungsgemäßen magnetischen Eisenoxids.

Die erfindungsgemäßen Magnetite können vorzugsweise folgendermaßen hergestellt werden:
1. Vorlegen einer alkalischen Komponente unter Schutzgas
2. Erwärmen unter Rühren auf Fälltemperatur
3. Zudosieren einer Eisen-II-Komponente und der zusätzlichen Verbindung
4. Erwärmen auf Reaktionstemperatur
5. Oxidieren mit einem Oxidationsmittel bis zum angestrebten Fe-III-Gehalt

Es ist jedoch auch möglich, die Magnetite oder Spinell-Ferrite nach anderen an sich bekannten Verfahren herzustellen.

Die Zugabe der zusätzlichen Verbindung zur Erzielung der angestrebten triboelektrischen Ladung kann, je nach Art des Zusatzes, bei der Fällung zur Fe-II-Komponente oder zur fertig gewaschenen Magnetitsuspension erfolgen.

Als Zusätze werden bevorzugt die folgenden Stoffe eingesetzt:
Oxide der Elemente aus der Gruppe bestehend aus Li, Na, K, Mg, Ca, Sr, Ba, Zn, Mn;
Hydroxide oder Oxihydroxide der Elemente aus der Gruppe bestehend aus Li, Na, K, Mg, Ca, Sr, Ba, Zn, Mn;
schwer wasserlösliche Salze der Elemente aus der Gruppe bestehend aus Li, Na, K, Mg, Ca, Sr, Ba, Zn, Mn;
leicht wasserlösliche Salze der Elemente aus der Gruppe bestehend aus Li, Na, K, Mg, Ca, Sr, Ba, Zn, Mn;
organische Zirkonium-IV-Verbindungen, wie z.B. Zirkonium-IV-fettsäureester;
organische Cer-IV-Verbindungen, wie z.B. Cer-IV-fettsäureester;
organische Zinn-IV-Verbindungen, wie z.B. Zinn-IV-fettsäureester.

Als alkalische Komponente wird bevorzugt bei der Herstellung der Magnetite ein Alkalihydroxid, ein Erdalkalihydroxid, ein Erdalkalioxid, ein Alkalicarbonat oder Ammoniak eingesetzt.

Eisen-II wird typischerweise in Form einer wasserlöslichen Fe-II-Komponente eingesetzt, wobei besonders bevorzugt FeSO₄ oder FeCl₂ Anwendung finden. Es ist jedoch auch möglich, andere wasserlösliche Fe-II-Verbindungen einzusetzen. Als Oxidationsmittel können Luftsauerstoff, reiner Sauerstoff, H₂O₂, Alkalimetallchlorate(V), Alkalimetallchlorate(VII) oder Nitrate eingesetzt werden. Aus wirtschaftlichen Gründen werden besonders bevorzugt Luftsauerstoff, reiner Sauerstoff, H₂O₂ oder Natriumnitrat eingesetzt.

Die nach bekannten Methoden (z.B. Einstufenfällverfahren; DE-A 3 209 469) hergestellten magnetischen Eisenoxide haben normalerweise einen Fe-Gehalt von 45-73 Gew.-% (nach DIN 55 913 bestimmt) in Abhängigkeit vom Fe-II-Gehalt und gegebenenfalls vom Gehalt an Dotierungselementen. Die triboelektrische Ladung beträgt bei diesen Eisenoxiden weniger als -2 µC/g (Meßmethode siehe unten). Magnetische Eisenoxide, die nach anderen bekannten Verfahren (z.B. durch Umsetzung von metallischem Eisen mit Nitrobenzol) oder anderen Fäll- oder Reduktionsverfahren hergestellt wurden, haben in der Regel negative triboelektrische Ladungspotentiale um ca. -5 µC/g. Die nach dem Verfahren der Oxidation von Fe mit Nitrobenzol hergestellten Magnetite weisen jedoch häufig eine Feuchteaufnahme von mehr als 1,5 Gew.-%/24 Std auf. Derart hohe Werte können bei der Herstellung von Tonern zu unerwünschten Eigenschaftsveränderungen führen.

Um die erfindungsgemäßen magnetischen Eisenoxide herzustellen, wird bevorzugt ein magnetisches Eisenoxid nach dem Einstufenfällverfahren hergestellt.

Dieses Ausgangsprodukt weist ohne Zugabe der zusätzlichen Verbindung eine Helligkeit (L*) von 45,0 bis 70,0 CIELAB-Einheiten, einen Farbstich (a*) von -0,5 bis 1,5 CIELAB-Einheiten, einen Farbstich (b*) von -1,0 bis -7,0 CIELAB-Einheiten, einen Eisengehalt von 45-73 Gew.-% und eine triboelektrische Ladung von etwa -2 µC/g auf. Durch die zusätzliche Verbindung wird ein magnetisches Eisenoxid mit 45-73 Gew.-% Fe und einer Helligkeit (L*) von 45,0 bis 65,0 CIELAB-Einheiten erhalten. Die übrigen optischen Eigenschaften verändern sich unwesentlich. Ein besonderer Vorzug der erfindungsgemäßen Produkte ist, dass sie nur geringe Mengen an Feuchte aufnehmen. Die triboelektrische Ladung des Produktes ist um mindestens 30 % gegenüber dem Ausgangsmaterial erhöht.

Bevorzugt weisen die erfindungsgemäßen magnetischen Eisenoxide eine triboelektrische Ladung von -10 µC/g bis +10 µC/g auf. Besonders bevorzugt sind magnetische Eisenoxide mit einer triboelektischen Ladung von 0 bis 10 µC/g, wobei die triboelektrische Ladung nach dem unten näher beschriebenen Verfahren ermittelt wird.

Die zur Herstellung der triboelektrischen Ladung erforderliche Dotierung kann in Form von wasserlöslichen Salzen der obengenannten Metalle zur Eisen-II-Komponente erfolgen. Es ist weiterhin möglich, Rohstoffe zu verwenden, die bereits die erforderlichen Zusätze in den gewünschten Mengen enthalten. So kann beispielsweise die bei der Beize Mg- oder Zn-haltiger Stähle anfallende Altsäure, die entsprechende Mengen an Mg oder Zn neben Fe enthält, eingesetzt werden. Weiterhin kann der Zusatz beispielsweise in Form von Oxiden, Oxihydroxiden, Hydroxiden, schwerlöslichen Salzen des Magnesiums, Mangans, Calciums oder Zinks oder in Form der oben aufgeführten organischen Verbindungen auch nach Waschung und Filtration zur fertigen Magnetitsuspension vor der Trocknung gegeben werden. Der erforderliche Zusatz wird mit einer geeigneten Dosiereinrichtung in der notwendigen Menge zugegeben und mit einem gut wirkenden Dispergiergerät vollständig in der Magnetitsuspension verteilt. Um eine Entmischung während des Trocknungsvorgangs zu verhindern, wird die Suspension während der Aufgabe auf den Trockner dispergiert.

Die Messung der Eigenschaften der fertigen magnetischen Eisenoxide mit Eisenoxid-Gehalten von 45-73 Gew.-% Fe erfolgt nach den unten beschriebenen Methoden:
1. Messung der triboelektrischen Ladung am pulverförmigen Endprodukt (wie sie in den Ansprüchen beansprucht wird)
   0,5 g des trockenen magnetischen Eisenoxids werden mit 9,5 g eines Styrolacrylatharzes der Firma Degussa (Typ: VPOT 409) 15 Minuten in einer 10 ml Glasflasche auf einem Rollenbock bei 60 min⁻¹ gemischt und aufgeladen. Anschließend wird davon eine Menge von ca. 100 mg entnommen, genau ausgewogen und in ein Blow-off-Typ Pulverladungsmeßgerät (Hersteller: Fa. Toshiba Chem. Prod. Co. Ltd., Tokyo, Typ TB 200) gegeben. Die Messung der triboelektrischen Ladung erfolgt nach Ausblasen mit Stickstoff von 1 bar für 30 sec. Dabei befindet sich im Faradayschen Käfig des TB 200 ein sorgfältig gereinigtes Sieb aus rostfreiem Stahl mit einer Maschenweite von 60 µm.
2. Farbwerte werden durch Präparation eines Lackes geprüft.
   Hierzu werden 2,0 g des Bindemittels Alkydal F48 (Produkt der Bayer AG), 0,1 g des zu prüfenden magnetischen Eisenoxids und 1,0 g TiO₂ Bayertitan R-FK2 (Produkt der Bayer AG) auf einem Muller mit einer Belastung von 2,5 kg und einem Druchmesser von 25 mm der Fa. Engelsmann angerieben.
   Die Messung der Farbwerte erfolgt nach ASTM E 308-90, D 3964, D 2244-89. Die Auswertung erfolgt unter Einschluß des Glanzes ohne mathematische Berücksichtigung des Glanzbetrags im Standardbeobachtungswinkel (2°) bei Normlichtart C. Die spektrale Auflösung des verwendeten Messgeräts beträgt hierbei 20 nm.
   Vor der Messung werden 3,2 g des magnetischen Eisenoxids am Microdismembrator (30") (Fa. Braun) mit einer Achatkugel von 10mm Durchmesser gemahlen.
3. Die Magnetwerte (Koerzitivkraft, spezifische Sättigungsmagnetisierung, spezifische remanente Magnetisierung) werden an einer Magnetmeßapparatur der Fa. Bayer bei einer Feldstärke von 5000 Oe (entsprechend 398 kA/m) gemessen.
4. Die BET-Oberfläche wird nach DIN 66 131 gemessen.
   Gasgemisch: 90 % He, 10 % N₂, Meßtemperatur: 77,4 K.
   Ausheizen bei 140°C, 60 Minuten.
5. Elementanalyse Si, Mn, Ca, Mg, Zn, Na etc.
   Die Elemente werden spektralanalytisch durch ICP-OES bestimmt.
6. Elementanalyse Fe, Fe-II, Fe-III
   Bestimmungen nach DIN 55 913. Der Fe-II-Gehalt wird durch Titration mit KMnO₄ eines Memotitrators (Mettler DL-70) ermittelt. Fe-III wird analog mit TiCl₃ bestimmt. Der Gesamteisengehalt wird aus den beiden Einzelwerten und der Einwaage errechnet. Die Bestimmung der Gehalte der beiden Maßlösungen erfolgt täglich.
7. Teilchenform, Teilchengröße
   Abschätzung der Teilchengröße und -form aus einer transmissionsmikroskopischen (TEM) Aufnahme bei einer Vergrößerung von 30 000.

### Beispiele

### Beispiel 1

Ein Fällungsmagnetit wurde nach dem in JP-A 51 044 298 beschriebenen Verfahren hergestellt.

Dieser hatte eine triboelektrische Ladung von -1,7 µC/g. Die Messung erfolgte nach dem auf der Seite 7 beschriebenen Verfahren.

Zu einer Suspension mit einem Gehalt an 50 Gew.-% des oben hergestellten Magnetits wurden 2 Gew.-% MgO, bezogen auf den Magnetit, gegeben und so lange mit einem Dispergiergerät dispergiert, bis eine homogene Dispersion vorlag. Diese Dispersion wurde anschließend getrocknet und mit einem geeigneten Mahlaggregat gemahlen. Das erhaltene Endprodukt hatte folgende Eigenschaften:

| | |
|---|---|
| Helligkeit L* | 50,8 CIELAB-Einheiten |
| a* | 0,6 CIELAB-Einheiten |
| b* | -3,5CIELAB-Einheiten |
| Si-Gehalt | 0,68 Gew.-% |
| Koerzitivkraft | 74 Oe (entsprechend 5,89 kA/m) |
| Teilchengröße | 0,2 µm |
| Fe-Gehalt | 68,6 Gew.-% |
| MgO-Gehalt | 1,5 Gew.-% |
| triboelektrische Ladung | +1,6 µC/g |

### Beispiel 2

Ein Fällungsmagnetit wurde durch Fällung von FeSO₄ mit NaOH bei pH 11,0 und 85°C Fälltemperatur und anschließender Oxidation mit Luftsauerstoff bei 85°C in einem Rührkessel hergestellt.

Dieser Fällungsmagnetit hatte eine triboelektrische Ladung von -1,9 µC/g.

Zu einer Suspension mit einem Gehalt an 50 Gew.-% des oben hergestellten Magnetits wurden 2 Gew.-% MgO, bezogen auf den Magnetit, gegeben und so lange mit einem Dispergiergerät dispergiert, bis eine homogene Dispersion vorlag. Diese Dispersion wurde anschließend getrocknet und mit einem geeigneten Mahlaggregat gemahlen. Das erhaltene Endprodukt hatte folgende Eigenschaften:

| | |
|---|---|
| Helligkeit L* | 58,4 CIELAB-Einheiten |
| a* | -0,1 CIELAB-Einheiten |
| b* | -5,9CIELAB-Einheiten |
| Si-Gehalt | 0,01 Gew.-% |
| Koerzitivkraft | 93 Oe (entsprechend 7,4 kA/m) |
| Teilchengröße | 0,3 µm |
| Fe-Gehalt | 70,3 Gew.-% |
| MgO-Gehalt | 1,6 Gew.-% |
| triboelektrische Ladung | +2,0 µC/g |

## Patentansprüche

1. Magnetitteilchen, bestehend aus magnetischem Eisenoxid mit einem Fe-Gehalt von 45 bis 73 Gew.-%, einer Helligkeit (L*) von 45,0 bis 65,0 CIELAB-Einheiten, einem Farbstich (a*) von -0,5 bis 1,5 CIELAB-Einheiten, einem Farbstich (b*) von -1,0 bis -7,0 CIELAB-Einheiten und aus einer oder mehreren zusätzlichen Verbindungen aus der Gruppe bestehend aus Oxiden, Hydroxiden, Oxihydroxiden der Metalle Lithium, Natrium, Kalium, Magnesium, Calcium, Strontium, Barium, Mangan und Zink, organischer Zirkonium-IV-Verbindungen, organischer Cer-IV-Verbindungen und organischer Zinn-IV-Verbindungen, in einer Menge von 0,1 bis 5 Gew.-%, die die triboelektrische Ladung, gemessen nach der in der Beschreibung beschriebenen Methode, des Ausgangsmaterials ohne Zusatz um mindestens 30 % erhöhen, erhältlich dadurch, dass ein magnetisches Eisenoxid mit einem Eisengehalt von 45 bis 73 Gew.-% und einer Helligkeit (L*) von 45,0 bis 70 CIELAB-Einheiten, einem Farbstich (a*) von -0,5 bis 1,5 CIELAB-Einheiten und einem Farbstich (b*) von -1,0 bis -7,0 CIELAB-Einheiten vorgelegt wird, eine oder mehrere zusätzliche Verbindungen aus der Gruppe bestehend aus Oxiden, Hydroxiden, Oxihydroxiden, der Metalle Lithium, Natrium, Kalium, Magnesium, Calcium, Strontium, Barium, Mangan und Zink, organischer Zirkonium-IV-Verbindungen, organischer Cer-IV-Verbindungen und organischer Zinn-IV-Verbindungen, zugesetzt werden, danach gut gemischt und gegebenenfalls getrocknet wird.

2. Magnetitteilchen gemäß Anspruch 1, **dadurch gekennzeichnet, dass** die Zugabe der zusätzlichen Verbindung zu einer wäßrigen Dispersion des magnetischen Eisenoxids erfolgt.

3. Verwendung der Magnetitteilchen gemäß Ansprüchen 1 und 2 zur Herstellung von Tonern, Druckfarben und Farben für Tintenstrahldrucker.

## Claims

1. Magnetite particles, consisting of magnetic iron oxide having an Fe content of 45 to 73 wt.%, a luminance (L*) of 45.0 to 65.0 CIELAB units, a colour cast (a*) of -0.5 to 1.5 CIELAB units and a colour cast (b*) of -1.0 to -7.0 CIELAB units, and of one or more supplementary compounds selected from oxides, hydroxides, hydrated oxides of the metals lithium, sodium, potassium, magnesium, calcium, strontium, barium, manganese and zinc, from organic zirconium(IV) compounds, organic cerium(IV) compounds and organic tin(IV) compounds, in a quantity of 0.1 to 5 wt.%, which increase the triboelectric charge (measured according to the method described in the Description) of the starting material, without additive, by at least 30%, obtainable by placing in a vessel a magnetic iron oxide having an iron content of 45 to 73 wt.%, a luminance (L*) of 45.0 to 70 CIELAB units, a colour cast (a*) of -0.5 to 1.5 CIELAB units and a colour cast (b*) of -1.0 to -7.0 CIELAB units, adding thereto one or more supplementary compounds selected from oxides, hydroxides, hydrated oxides of the metals lithium, sodium, potassium, magnesium, calcium, strontium, barium, manganese and zinc, from organic zirconium(IV) compounds, organic cerium(IV) compounds and organic tin(IV) compounds, then mixing thoroughly and optionally drying the mixture.

2. Magnetite particles according to claim 1, **characterised in that** the supplementary compound is added to an aqueous dispersion of the magnetic iron oxide.

3. Use of the magnetite particles according to claims 1 and 2 for the production of toners, printing inks and inks for ink jet printers.

## Revendications

1. Particules de magnétite constituées par de l'oxyde de fer magnétique possédant une teneur en Fe de 45 à 73 % en poids, une brillance (L*) de 45,0 à 65,0 unités CIELAB, un voile coloré (a*) de -0,5 à 1,5 unité CIELAB, un voile coloré (b*) de -1,0 à -7,0 unités CIELAB et par un ou plusieurs composés supplémentaires choisis parmi le groupe constitué par des oxydes, des hydroxydes, des oxyhydroxydes des métaux lithium, sodium, potassium, magnésium, calcium, strontium, baryum, manganèse et zinc, des composés organiques de zirconium-IV, des composés organiques de cérium-IV et des composés organiques d'étain-IV, en une quantité de 0,1 à 5 % en poids, qui augmentent la charge triboélectrique, mesurée conformément au procédé décrit dans la description, de la matière de départ, sans les additifs, à concurrence d'au moins 30 %, que l'on obtient en déposant au préalable un oxyde de fer magnétique possédant une teneur en fer de 45 à 73 % en poids et une brillance (L*) de 45,0 à 70 unités CIELAB, un voile coloré (a*) de -0,5 à 1,5 unité CIELAB, un voile coloré (b*) de -1,0 à -7,0 unités CIELAB, en ajoutant un ou plusieurs composés supplémentaires choisis parmi le groupe constitué par des oxydes, des hydroxydes, des oxyhydroxydes des métaux lithium, sodium, potassium, magnésium, calcium, strontium, baryum, manganèse et zinc, des composés organiques de zirconium-IV, des composés organiques de cérium-IV et des composés organiques d'étain-IV, en mélangeant ensuite convenablement et en séchant le cas échéant.

2. Particules de magnétite selon la revendication 1, **caractérisées en ce que** l'addition du composé supplémentaire a lieu à une dispersion aqueuse de l'oxyde de fer magnétique.

3. Utilisation des particules de magnétite selon les revendications 1 et 2, pour la préparation de toners, d'encres d'imprimerie et d'encres pour des imprimantes à jet d'encre.
